# EUROPEAN PATENT SPECIFICATION

(11) **EP 1 460 901 B1**
(45) Date of publication and mention of the grant of the patent: **20.12.2006**
(21) Application number: 02785106.2
(22) Date of filing: 28.11.2002
(51) Int. Cl.: A22B 1/00

(54) **APPARATUS AND METHOD FOR STUNNING OF SLAUGHTER ANIMALS**
VORRICHTUNG UND VERFAHREN ZUM BETÄUBEN VON SCHLACHTTIEREN
APPAREIL ET PROCEDE D'ETOURDISSEMENT D'ANIMAUX DE BOUCHERIE

(30) Priority: 06.12.2001 DK 200101809
(43) Date of publication of application: 29.09.2004
(73) Proprietor: Slagteriernes Forskningsinstitut, 4000 Roskilde (DK)
(72) Inventor: CHRISTENSEN, Leif, DK-3500 Vaerloese (DK)
(74) Representative: Elsworth, Dominic Stephen
(86) International application number: PCT/DK2002/000795
(87) International publication number: WO 2003/047355

(56) References cited:
- EP-A1- 0 920 807
- EP-A2- 0 441 633
- SE-C2- 503 565

## Description

The present invention relates to an apparatus and a method for stunning of slaughter animals. A similar apparatus and method is already however by DE-A-3 835 763.

In known apparatuses for stunning of cattle the animals are guided from the pen area into a shooting box where they are stunned with a bolt pistol. Some of the apparatuses have a driving corridor with a travelling/elevating gate that drives the animals forwards in the driving corridor to the box. When the travelling/elevating gate has arrived at an elevating gate in front of the shooting box it will stop and the elevating gate will be lowered so that the box is closed. The driven-in animal is then fixed by the neck by means of hoops that are placed at the front end of the box. An operator makes sure that the hoops are carried to their position of fixation.

Apparatuses of this type can be troublesome for the operator when the animals are uneasy and move around in the box, so that they are difficult to fix.

The purpose of the present invention is to provide an apparatus and a method, which will relieve this problem.

The apparatus according to the invention is characterized in that it comprises a driving corridor with a driving gate system comprising a driving gate, conveyance devices for mechanical conveyance of the driving gate in the corridor and control means to control the gate in relation to the walls of the driving corridor, and a stunning box which is placed in continuation of the driving corridor and has fixation devices for an animal in the box, the driving gate system being designed to convey the driving gate into the stunning box.

In the apparatus according to the invention the gate is conveyed into the stunning box, and this means that the fixation of the animal is considerably easier to perform for the operator because the animal is driven all the way forward to a position where it can be fixed. Besides, the gate prevents the animal from walking backwards in the box away from the hoops, irrespective of its size.

Advantageous embodiments of the apparatus according to the invention are stated in the sub-claims to Claim 1.

The driving gate system can be designed to bring the conveyance of the driving gate to a stop in the stunning box by an instruction to that effect, e.g. by a signal from the operator or by means of an automatic device.

The conveyance of the driving gate in the stunning box is brought e.g. to a stop in one of several predetermined stop positions by an instruction to that effect.

The conveyance of the driving gate in the stunning box can be brought to a stop by a signal, which is released by the animal in the box through its movement past a release device in the box.

The conveyance of the driving gate in the stunning box can be brought to a stop by a signal from a weighing device in the floor of the box or the driving corridor.

The driving gate preferably has a reduced speed of conveyance in the stunning box, so that there will be time to bring the fixing devices into position.

The stunning box can have the same width as the driving corridor.

According to a preferred embodiment, the stunning box has in a first section, which is adjacent to the driving corridor, the same width as this, and in a second section, which is located farther from the driving corridor it has a smaller width than this. In this way, less sideways freedom of movement is allowed for the animal, which contributes to an easier fixation of the animal.

The width of the driving corridor can continue into the stunning box in ¼ to ½ of its length, so that the advantages of the apparatus are utilised both by big and by small animals.

The width of the box in the second section located farther from the driving corridor is preferably between 0.7 and 0.9 of the width of the driving corridor.

An elevating gate can constitute one side wall of the box, which gate extends from the entrance of the box and past the fixation devices, whereas the other side wall is stationary. In this way, the box can effortlessly be emptied of the stunned animal by opening the elevating gate. The floor of the box is preferably tiltable towards the elevating gate, which facilitates the emptying process. Another possibility is to have a fixed floor and to build in a pushing device in the stationary wall.

The narrowing to a smaller width than that of the driving corridor preferably only takes place at the stationary side wall. This gives an uncomplicated design of the elevating gate.

The fixation devices can comprise hoops in the second section of the box, which hoops are mounted on each their side wall, and the hoops can be moved between a position of fixation, where they protrude into the box, and an open position, where the hoops are farther from each other.

In a preferred embodiment, means are mounted on the elevating gate to move its fixation device between a fixing and an open position.

An elevating gate is preferably placed at the entrance to the box from the driving corridor. This has the effect that the travelling/elevating gate can be released for return as soon as the animal has been fixed.

The driving gate used is preferably designed in such a way that when returning in the driving corridor it will not block up the forward movement of slaughter animals in the driving corridor. A travelling/elevating gate of a design known per se can for instance be used. The driving corridor can have more than one driving gate.

The pens are preferably placed immediately adjacent to the driving corridor. It is particularly preferred that the pens for slaughter animals to be stunned in the apparatus, are placed to one side of the driving corridor, and that the driving corridor has gates in the corresponding side wall, which by opening allows passage of an animal from a pen to the driving corridor.

The driving corridor has preferably one or several gates to divide the corridor into several sections. The driving corridor has preferably one or several sets of half-gates which in the closed position blockade the driving corridor and in the open position are swung in to each their side wall and in this position will allow passage of the driving gate in the driving corridor. In this way several slaughter animals can be placed in a position where they are ready to be driven forwards in the driving corridor and towards the stunning box.

The method according to the invention for stunning of slaughter animals in an apparatus with a driving corridor, in which an slaughter animal is driven forwards by means of a driving gate system, and a stunning box in which the animal is fixed by means of fixation devices, is characterized in that the driving-forwards of the animal by means of the driving gate system is continued into the box, the driving gate of the system being moved into the box.

Advantageous embodiments of the method according to the invention are stated in the sub-claims to Claim 13.

Preferably, the conveyance of the driving gate in the stunning box is stopped when the slaughter animal is in position for fixation. This will allow more time to perform the fixation.

The passage between the driving corridor and the box can be closed by means of a sliding gate, after the driving gate has been moved into the box. In this way, the driving gate can be released to return as soon as the fixation has been effected.

The driving gate can be returned, after stop in the box and fixation of the animal, to a position in front of a set of half-gates in the driving corridor. By use of half-gates there is room for several separated animals in the driving corridor at the same time, which makes the driving-in procedure more flexible.

By slaughter animals is understood, in the present text, cattle in particular, varying from calves to bulls. Thus, they can be heavy animals weighing 700 kg or more, and less heavy animals weighing 100 kg or less, as well as animals between these weights limits.

The stunning is performed preferably by means of a bolt pistol, but it can be effected electrically or by means of other stunning methods such as CO2-stunning, if desired.

The invention is described in further detail in the following, with reference to the drawings, in which
- Fig. 1 shows a plan of an apparatus according to the invention,
- Fig. 2 shows part of the apparatus in larger scale seen from above
- Fig. 3 shows the same part of the apparatus seen from the side, and
- Fig. 4 shows the part seen in cross section.

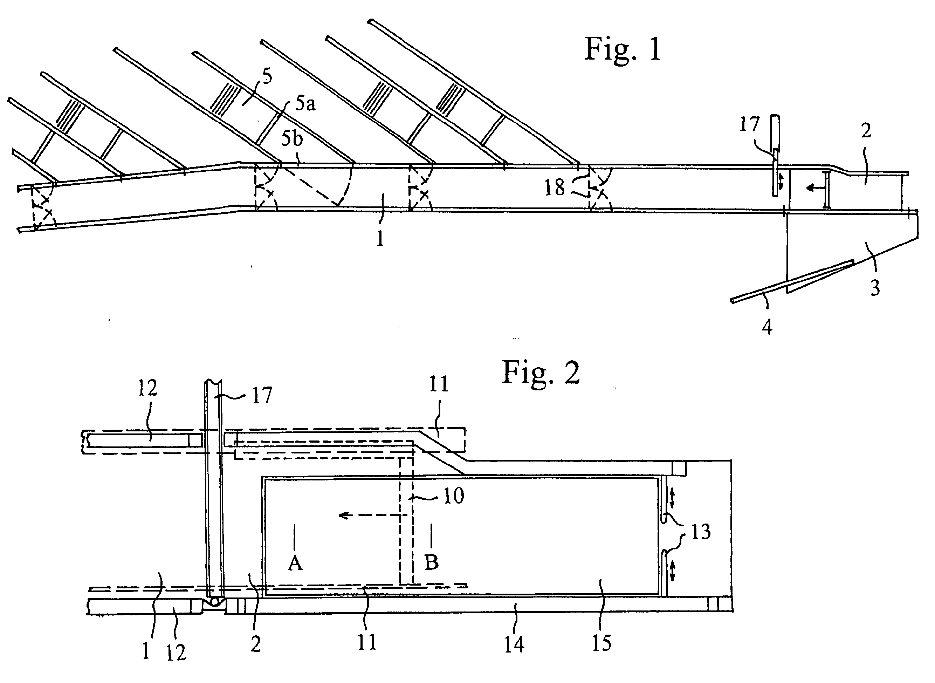

The apparatus in Fig. 1 comprises a driving corridor 1, a shooting box 2, and a discharge table 3 with a chain elevator 4. To one side of the driving corridor there are pens 5 for the animals, which are to be stunned and slaughtered.

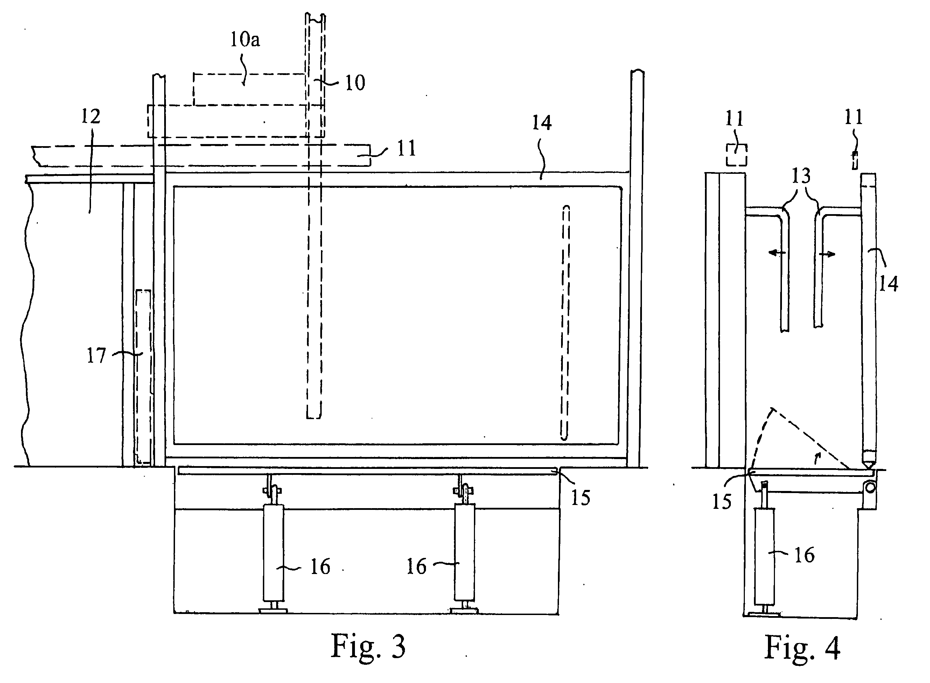

The shooting box and its connection with the driving corridor is seen in Figs. 2-4 in more detail. In the entrance end the shooting box has the same width as the driving corridor, whereas it is narrowed in the farther end, so that the sideways movements of the animal is more restricted here. A travelling/elevating gate 10 can be moved in the full length of the driving corridor by means of a motor system 10a. It runs on rails 11, which are mounted above the walls 12 of the driving corridor and continue for some length over the walls of the shooting box, where the shooting box has the same width as the driving corridor.

In the farther end of the shooting box there are two fixation hoops 13 shown in schematic outline, which hoops are intended to fix an animal by the neck. A motor arrangement moves the hoops towards the centre of the box to a position of fixation. One hoop and its motor arrangement are mounted on an elevating gate 14, which constitutes one side wall of the box and extends from the entrance of the box and past the hoops, so that even big animals can be discharged effortlessly. The other hoop is mounted on the other side wall, which is stationary.

The floor 15 of the box is hinged along one side of the box at the elevating gate and it can be tilted upwards in the other side by means of air cylinders 16, whereby a stunned animal is discharged from the box onto the discharge table next to the box.

At the entrance to the box there is a sliding gate 17 to close the box when the travelling/elevating gate is returned.

In the driving corridor are also placed four sets of half-gates 18, which can blockade different sections of the driving corridor and in their open position along the walls of the corridor allow passage of the travelling/elevating gate with lowered gate (Fig. 1).

The apparatus operates in the following way:

From a pen 5 an animal is let into the driving corridor 1 by opening of an elevating gate 5a at the end of the pen and opening of a corresponding swivel gate 5b in the wall of the driving corridor. When the animal has entered the driving corridor 1 the gates 5a and 5b will be closed again.

The travelling/elevating gate 10 is brought in a position immediately in front of the closest located set of half-gates 18 behind the animal, if this has not already taken place, and the gate is lowered into the corridor. The half-gates in front the animal are opened, if they have not already been opened. The travelling/elevating gate is moved forwards in the corridor, so that the gate drives the animal towards the box. When the travelling/elevating gate is opposite the sliding gate 17 the speed is reduced and it continues its movement forwards and is moved in the box at a reduced speed. The forward movement of the gate is stopped automatically when a certain condition occurs, which condition expresses the fact that the animal has been placed with its neck area opposite the hoops.

The certain condition can for instance be that the gate has reached one certain of several possible stop positions, which have been selected by the operator on the basis of the animal's size. By the stoppage the motor arrangements of the hoops are activated, which will bring the hoops into a position of fixation. The operator can e.g. on a keyboard have chosen a type of slaughter animal with a size corresponding to the animal in question and thereby cause stoppage in a position which is optimum for fixation of the animal by means of the hoops. The line A in Fig. 2 indicates a stop position for large animals (approx. 600 kg) and the line B a stop position for small animals (approx. 200 kg).

Apart from the operator's choice, the operations take place automatically by means of a control system, which is connected with the motors of the gate and the hoops.

The certain condition can in another embodiment e.g. be that the animal in the box has taken up the optimal position for fixation and thereby has broken a ray of light or actuated a sensor in the wall of the box, causing a signal to be sent to a control system telling it to stop the conveyance of the gate in the box.

The certain condition can in a third embodiment e.g. be that the current position of the gate is in accordance with a signal from a registration of the animal's weight, e.g. the signal from a weighing cell placed underneath a section of the driving corridor or under the floor of the box. High weight means that it is a large animal, whereby the condition occurs fairly quickly, so that the gate is stopped early (e.g. at the line A), whereas it takes longer before the condition occurs for an animal of lower weight, so that the gate is stopped later (e.g. at the line B). In this way the driving-forward is stopped in a position, which is optimal for fixation of the animal in question.

It shall be mentioned that the driving-forwards does not necessarily have to be stopped in the position for optimum fixation of the animal, but can occur at an earlier or later time if desired, e.g. to allow the animal more room before the fixation.

The sliding gate 17 is closed as soon as the travelling/elevating gate has passed it on its way into the shooting box. When the animal has been fixed, the gate 10 is raised and the travelling/elevating gate is returned in the driving corridor for driving-in of a new animal into the box.

After the operator has stunned the fixed animal the hoops 13 are pulled back and the elevating gate 14 is opened. The cylinders 16 are activated, so that the floor is tilted and the animal falls out through the opening under the elevating gate onto the discharge table 3. The operator chains the animal, which is hoisted by the chain elevator 4 and transported into the conveyor system of the slaughter line for sticking, bleeding and further processing.

The system with the gates 18 and the sliding gate 17 is extremely flexible, since they make it possible to work with several animals in the corridor, so there constantly can be an animal available to be driven into the shooting box. The operator can e.g. let four animals into the four corridor sections which are divided off by the four sets of half-gates and the sliding gate, and start an automatically controlled procedure that fetches the animals one by one into the box and fixes them for stunning. Therefore, the operator gets more liberty of action to stun and chain the animals, and the driving-in process from the pens to empty corridor sections can take place at a quiet speed, which is not stressful for the animals.

## Claims

1. Apparatus for stunning of slaughter animals, **characterized in that** it comprises a driving corridor (1) with a driving gate system comprising a driving gate (10), conveyance devices (10a) for mechanical conveyance of the driving gate in the corridor and control means (11) to control the gate (10) in relation to the walls of the driving corridor (12), and a stunning box (2), which is placed in continuation of the driving corridor (1) and has fixation devices (13) for an animal in the box, the driving gate system being designed to convey the driving gate (10) into the stunning box (2).

2. Apparatus according to claim 1, **characterized in that** the conveyance of the driving gate in the stunning box is brought to a stop in one of several predetermined stop positions by instruction to that effect.

3. Apparatus according to claim 1, **characterized in that** the conveyance of the driving gate in the stunning box is brought to a stop by a signal released by the animal in the box through its movement past a release device in the box.

4. Apparatus according to claim 1, **characterized in that** the conveyance of the driving gate in the stunning box is brought to a stop by a signal from a weighing device in the floor of the box or the driving corridor.

5. Apparatus according to claim 1, **characterized in that** the driving gate (10) has a reduced speed of conveyance in the stunning box (2).

6. Apparatus according to claim 1, **characterized in that** the stunning box (2) in the first section, which is adjacent to the driving corridor (1), has the same width as this, and in a second section, which is farther from the driving corridor, has a smaller width than this.

7. Apparatus according to claim 6, **characterized in that** the width of the driving corridor (1) continues into the stunning box (2) in ¼ to ½ of its length.

8. Apparatus according to claim 1, **characterized in that** an elevating gate (14) constitute one side wall of the box, which gate extends from the entrance of the box and past the fixation devices (13), whereas the other side wall is stationary.

9. Apparatus according to claims 6 and 8, **characterized in that** the narrowing to a smaller width than that of the driving corridor only takes place at the stationary side wall.

10. Apparatus according to claim 8, **characterized in that** means are mounted on the elevating gate (14) to move its fixation device between a fixing and an open position.

11. Apparatus according to claim 1, **characterized in that** a sliding gate (17) are placed at the entrance of the box (2) from the driving corridor (1).

12. Apparatus according to claim 1, **characterized in that** the driving corridor (1) has one or several sets of half-gates (18), which in the closed position blockade the driving corridor and in the open position are swung in to each their side wall and in this position allow passage of the driving gate (10) in the driving corridor.

13. Method for stunning of slaughter animals in an apparatus with a driving corridor (1), in which a slaughter animal is driven forwards by means of a driving gate system (10, 10a, 11), and a stunning box (2) in which the animal is fixed by means of fixation devices (13), **characterized in that** the driving forwards of the animal by means of the driving gate system is continued into the box (2), the driving gate (10) of the system being moved into the box.

14. Method according to claim 13, **characterized in that** the conveyance of the driving gate in the stunning box is stopped when the slaughter animal is in position for fixation.

15. Method according to claim 13, **characterized in that** the passage between the driving corridor (1) and the box (2) is closed by means of a sliding gate (17) after the driving gate (10) has been moved into the box.

## Patentansprüche

1. Vorrichtung zum Betäuben von Schlachttieren, **dadurch gekennzeichnet, dass** sie einen Treibkorridor (1) mit einem Treibgattersystem, umfassend ein Treibgatter (10), Fördereinrichtungen (10a) zum mechanischen Fördern des Treibgatters in dem Korridor und Steuermittel (11) zum Steuern des Gatters (10) im Verhältnis zu den Wänden (12) des Treibkorridors, und eine Betäubungsbox (2), die in Fortführung des Treibkorridors (1) platziert ist und Fixierungseinrichtungen (13) für ein Tier in der Box aufweist, umfasst, wobei das Treibgattersystem konstruiert ist, um das Treibgatter (10) in die Betäubungsbox (2) zu fördern.

2. Vorrichtung nach Anspruch 1, **dadurch gekennzeichnet, dass** das Fördern des Treibgatters in der Betäubungsbox durch dahingehende Anweisung in einer von mehreren vorbestimmten Haltepositionen zu einem Halt gebracht wird.

3. Vorrichtung nach Anspruch 1, **dadurch gekennzeichnet, dass** das Fördern des Treibgatters in der Betäubungsbox durch ein Signal zu einem Halt gebracht wird, das von dem Tier in der Box durch seine Bewegung in der Box an einer Auslöseeinrichtung vorbei ausgelöst wird.

4. Vorrichtung nach Anspruch 1, **dadurch gekennzeichnet, dass** das Fördern des Treibgatters in der Betäubungsbox durch Signal von einer Wiegeeinrichtung in dem Boden der Box oder des Treibkorridors zu einem Halt gebracht wird.

5. Vorrichtung nach Anspruch 1, **dadurch gekennzeichnet, dass** das Treibgatter (10) in der Betäubungsbox (2) eine verringerte Fördergeschwindigkeit aufweist.

6. Vorrichtung nach Anspruch 1, **dadurch gekennzeichnet, dass** die Betäubungsbox (2) in dem ersten Abschnitt, der dem Treibkorridor (1) benachbart ist, die gleiche Breite wie dieser aufweist und in einem zweiten Abschnitt, der weiter von dem Treibkorridor entfernt ist, eine geringere Bereite als dieser aufweist.

7. Vorrichtung nach Anspruch 6, **dadurch gekennzeichnet, dass** sich die Breite des Treibkorridors (1) in ¼ bis ½ der Länge der Betäubungsbox (2) in diese fortsetzt.

8. Vorrichtung nach Anspruch 1, **dadurch gekennzeichnet, dass** ein Hebegatter (14) eine Seitenwand der Box bildet, wobei sich das Gatter von dem Eingang der Box und an den Fixierungseinrichtungen (13) vorbei erstreckt, wohingegen die andere Seitenwand stationär ist.

9. Vorrichtung nach den Ansprüchen 6 und 8, **dadurch gekennzeichnet, dass** das Verengen auf eine geringere Breite als die des Treibkorridors nur an der stationären Seitenwand stattfindet.

10. Vorrichtung nach Anspruch 8, **dadurch gekennzeichnet, dass** Mittel an dem Hebegatter (14) angebracht sind, um seine Fixierungseinrichtung zwischen einer Fixierungs- und einer offenen Position zu bewegen.

11. Vorrichtung nach Anspruch 1, **dadurch gekennzeichnet, dass** ein Schiebegatter (17) an dem Eingang der Box (2) von dem Treibkorridor (1) platziert ist.

12. Vorrichtung nach Anspruch 1, **dadurch gekennzeichnet, dass** der Treibkorridor (1) einen oder mehrere Sätze Halbgatter (18) aufweist, die in der geschlossenen Position den Treibkorridor blockieren und in der offenen Position nach innen zu ihrer jeweiligen Seitenwand geschwenkt werden und in dieser Position das Passieren des Treibgatters (10) in den Treibkorridor gestatten.

13. Verfahren zum Betäuben von Schlachttieren in einer Vorrichtung mit einem Treibkorridor (1), in dem ein Schlachttier durch ein Treibgattersystem (10, 10a, 11) vorwärts getrieben wird, und einer Betäubungsbox (2), in der das Tier durch Fixierungseinrichtungen (13) fixiert wird, **dadurch gekennzeichnet, dass** das Vorwärtstreiben des Tieres mittels des Treibgattersystems in die Box (2) fortgeführt wird, wobei das Treibgatter (10) des Systems in die Box bewegt wird.

14. Verfahren nach Anspruch 13, **dadurch gekennzeichnet, dass** das Fördern des Treibgatters in der Betäubungsbox angehalten wird, wenn sich das Schlachttier in Position zur Fixierung befindet.

15. Verfahren nach Anspruch 13, **dadurch gekennzeichnet, dass** der Durchgang zwischen dem Treibkorridor (1) und der Box (2) durch ein Schiebegatter (17) geschlossen wird, nachdem das Treibgatter (10) in die Box bewegt worden ist.

## Revendications

1. Dispositif d'étourdissement d'animaux de boucherie, **caractérisé en ce qu'**il comprend un corridor d'entraînement (1) muni d'un système de porte d'entraînement comportant une porte d'entraînement (10), des dispositifs de transport (10a) pour un transport mécanique de la porte d'entraînement dans le corridor, et des moyens de commande (11) pour commander la porte (10) par rapport aux parois du corridor d'entraînement (12), et un box d'étourdissement (2) qui est placé dans le prolongement du corridor d'entraînement (1), et qui a des dispositifs de fixation (13) pour un animal dans le box, le système de porte d'entraînement étant conçu pour transporter la porte d'entraînement (10) dans le box d'étourdissement (2).

2. Dispositif selon la revendication 1, **caractérisé en ce que** le transport de la porte d'entraînement dans le box d'étourdissement est amené jusqu'à un arrêt dans une parmi plusieurs positions d'arrêt prédéterminées, par instruction à cette effet.

3. Dispositif selon la revendication 1, **caractérisé en ce que** le transport de la porte d'entraînement dans le box d'étourdissement est amené jusqu'à un arrêt par un signal libéré par l'animal dans le box à travers son déplacement au-delà d'un dispositif de libération dans le box.

4. Dispositif selon la revendication 1, **caractérisé en ce que** le transport de la porte d'entraînement dans le box d'étourdissement est amené jusqu'à un arrêt par un signal provenant d'un dispositif de pesage dans le plancher du box ou du corridor d'entraînement.

5. Dispositif selon la revendication 1, **caractérisé en ce que** la porte d'entraînement (10) a une vitesse de transport réduite dans le box d'étourdissement (2).

6. Dispositif selon la revendication 1, **caractérisé en ce que** le box d'étourdissement (2) dans le premier tronçon, qui est adjacent au corridor d'entraînement (1), a la même largeur que celui-ci, et dans un second tronçon, qui est plus éloigné du corridor d'entraînement, a une largeur plus petite que celui-ci.

7. Dispositif selon la revendication 6, **caractérisé en ce que** la largeur du corridor d'entraînement (1) continue dans le box d'étourdissement (2) sur 1/4 à 1/2 de sa longueur.

8. Dispositif selon la revendication 1, **caractérisé en ce qu'**une porte élévatrice (14) constitue une paroi latérale du box, laquelle porte s'étend à partir de l'entrée du box et au-delà des dispositifs de fixation (13), tandis que l'autre paroi latérale est stationnaire.

9. Dispositif selon les revendications 6 et 8, **caractérisé en ce que** le rétrécissement jusqu'à une largeur plus petite que celle du corridor d'entraînement a lieu uniquement au niveau de la paroi latérale stationnaire.

10. Dispositif selon la revendication 8, **caractérisé en ce que** des moyens sont montés sur la porte élévatrice (14) pour déplacer son dispositif de fixation entre une position de fixation et une position ouverte.

11. Dispositif selon la revendication 1, **caractérisé en ce qu'**une porte coulissante (17) est placée au niveau de l'entrée du box (2) à partir du corridor d'entraînement (1).

12. Dispositif selon la revendication 1, **caractérisé en ce que** le corridor d'entraînement (1) a un ou plusieurs ensembles de demi-portes (18), qui, dans la position fermée, bloquent le corridor d'entraînement et, dans la position ouverte, sont basculées vers chacune de leur paroi latérale, et, dans cette position, permettent le passage de la porte d'entraînement (10) dans le corridor d'entraînement.

13. Procédé d'étourdissement d'animaux de boucherie dans un dispositif ayant un corridor d'entraînement (1), dans lequel un animal de boucherie est entraîné vers l'avant par l'intermédiaire d'un système de porte d'entraînement (10, 10a, 11), et un box d'étourdissement (2), dans lequel l'animal est fixé par l'intermédiaire de dispositifs de fixation (13), **caractérisé en ce que** l'entraînement vers l'avant de l'animal par l'intermédiaire du système de porte d'entraînement est poursuivi dans le box (2), la porte d'entraînement (10) du système étant déplacée dans le box.

14. Procédé selon la revendication 13, **caractérisé en ce que** le transport de la porte d'entraînement dans le box d'étourdissement est arrêté lorsque l'animal de boucherie est dans sa position de fixation.

15. Procédé selon la revendication 13, **caractérisé en ce que** le passage entre le corridor d'entraînement (1) et le box (2) est fermé par l'intermédiaire d'une porte coulissante (17) après que la porte d'entraînement (10) ait été déplacée dans le box.
